# EUROPEAN PATENT SPECIFICATION

(11) **EP 2 866 404 B1**
(45) Date of publication and mention of the grant of the patent: **01.05.2019**
(21) Application number: 13790022.1
(22) Date of filing: 09.07.2013
(51) Int. Cl.: H04L 29/06, H04W 12/06, H04L 12/28, H04W 84/12

(54) **MOBILE TERMINAL WITH BUILT-IN PPPOE DIALING FUNCTION AND DIALING METHOD THEREOF**
MOBILES ENDGERÄT MIT INTEGRIERTER PPPOE-WÄHLFUNKTION UND WÄHLVERFAHREN DAFÜR
TERMINAL MOBILE À FONCTION INTÉGRÉE DE NUMÉROTATION SELON PPPOE ET PROCÉDÉ DE NUMÉROTATION CORRESPONDANT

(30) Priority: 27.09.2012 CN 201210374514
(43) Date of publication of application: 29.04.2015
(73) Proprietor: ZTE Corporation, Shenzhen, Guangdong 518057 (CN)
(72) Inventor: WANG, Bin, Shenzhen Guangdong 518057 (CN)
(74) Representative: Lavoix
(86) International application number: PCT/CN2013/079090
(87) International publication number: WO 2013/170814

(56) References cited:
- WO-A1-03/094438
- WO-A2-02/09451
- CN-A- 1 617 560
- CN-A- 101 702 836
- CN-A- 102 904 879
- CN-A- 102 917 359
- US-B1- 7 388 844
- Anonymous: "PPPoE for Android - Android Apps on Google Play", , 11 January 2012 (2012-01-11), XP055192418, Google Play Store Retrieved from the Internet: URL:https://play.google.com/store/apps/det ails?id=com.eagle.alicepppoe&hl=en [retrieved on 2015-05-29]
- Anonymous: "RP-PPPoE | Roaring Penguin", , 19 August 2012 (2012-08-19), XP055192427, Retrieved from the Internet: URL:https://web.archive.org/web/2012081905 0433/http://www.roaringpenguin.com/product s/pppoe [retrieved on 2015-05-29]
- Anonymous: "WIFI PPPOE - Android Apps on Google Play", , 11 September 2012 (2012-09-11), XP055192429, Retrieved from the Internet: URL:https://play.google.com/store/apps/det ails?id=com.cnddu.wifipppoe&hl=en [retrieved on 2015-05-29]

## Description

### TECHNICAL FIELD

The disclosure relates to dialup technology in a mobile terminal, and more particularly to a mobile terminal with a built-in Point-to-Point Protocol over Ethernet (PPPoE) dialing function and a dialup method therefor.

### BACKGROUND

With rapid development of mobile communication terminal technology, particularly popularization of intelligent terminals, a basic demand of an intelligent terminal era is to surf the internet, browse a webpage, download data, watch an online video and the like through Wireless Fidelity (WIFI). A subscriber is required to undergo authentication before accessing a home WIFI hotspot or an urban WIFI hotspot deployed by an operator. In addition, any broadband or mobile subscriber is required to have an account and a password to connect to the internet, and utilizes a network service by inputting account information.

At present, operator-supported ways of subscriber authentication mainly include Extensible Authentication Protocol-Subscriber Identity Module (EAP-SIM) authentication, Extensible Authentication Protocol-Authentication and Key Agreement (EAP-AKA) authentication and PPPoE dialing authentication. With the EAP-SIM and EAP-AKA authentication, a mobile intelligent terminal, such as a mobile phone, acquires, from a Subscriber Identity Module (SIM) card or a Universal Subscriber Identity Module (USIM) card, account information including an International Mobile Subscriber Identification Number (IMSI) and a Mobile Equipment Identifier (MEID), and then interacts with a network according to a protocol in a specific format to complete authentication for the subscriber to go online. With the PPPoE dialing authentication, authentication is performed by providing an account and a password through an operator.

The PPPoE is a network tunnel protocol encapsulating the Point-to-Point Protocol (PPP) in an Ethernet framework. With the PPP integrated, the PPPoE can implement a function, such as authentication, encryption and compression, that cannot be provided by a traditional Ethernet, and is also applicable to a protocol system in which an access service is provided to a subscriber according to an Ethernet protocol, such as a Cable Modem, a Digital Subscriber Line (DSL), etc. Moreover, such a standard connection requiring login and a password facilitates billing by an access provider.

At present, a common router is generally provided with a PPPoE dialing function, such that a subscriber may go online at home generally with one dialing authentication. However, an Asymmetric Digital Subscriber Line (ADSL) access box, as a launched new-generation home gateway product, although capable of serving as a WIFI access point, adopts bridging technology, such that unlike the case with a common router, authentication has to be performed separately on each terminal accessing the internet by dialup through the ADSL access box. This requires that a mobile terminal is provided with a PPPoE dialing function. However, an existing mobile terminal usually has no such function, which makes it inconvenient to connect to the internet by PPPoE dialup using a mobile terminal.

Document WO 03094438 discloses a PPPoE client in a terminal equipment allowing the establishment of a Point-to-Point Protocol (PPP) session with a specific server in a WLAN domain.

### SUMMARY

In view of this, embodiments of the disclosure provide a mobile terminal with a built-in PPPoE dialing function and a dialup method therefor, capable of implementing internet connection by PPPoE dialup using a mobile terminal.

The invention is defined by the independent claims. Further embodiments are defined by the dependent claims.

To this end, a technical solution herein is implemented as follows.

An embodiment of the disclosure provides a mobile terminal with a built-in Point-to-Point Protocol over Ethernet (PPPoE) dialing function. The mobile terminal include a PPPoE dialing module and a security management module.

The PPPoE dialing module is configured to receive account information input by a subscriber and send the received account information to the security management module for authentication, receive a PPPoE dialing instruction sent by the security management module, trigger and complete PPPoE dialing connection.

The security management module is configured to receive the account information sent by the PPPoE dialing module, authenticate the account information, send a PPPoE dialing instruction to the PPPoE dialing module after the account information is authenticated, and feed state information during PPPoE dialup back to the PPPoE dialing module.

The PPPoE dialing module may be implemented by a third-party-developer application or by a built-in application of the mobile terminal.

The security management module may be implemented through an agent process with root permission.

A communication mechanism may be established between the PPPoE dialing module and the agent process.

The agent process may be a newly-created process with root permission or an existing process with root permission in a mobile terminal system.

The PPPoE dialing module may include a dialup access module, a state management module, an error processing module and a network control module.

The dialup access module may be configured to complete human-machine interaction, receive the account information input by the subscriber and send the received account information to the security management module for authentication, and detect the state information fed back by the security management module in real time.

The state management module may be configured to receive the PPPoE dialing instruction sent by the security management module, trigger a PPPoE stack and the network control module, manage a state during PPPoE dialup, and feed the state information back to the security management module.

The error processing module may be configured to process an abnormality during PPPoE dialup and feed an error code back to the state management module.

The network control module may be configured to complete data link establishment and Wireless Fidelity (WIFI) connection during PPPoE dialup and feed a network connection state back to the state management module.

An embodiment herein provides a dialup method for a mobile terminal with a built-in Point-to-Point Protocol over Ethernet (PPPoE) dialing function. The method may include:
receiving account information input by a subscriber and performing authentication to verify an identity of the subscriber; and
sending a PPPoE dialing instruction after the account information is authenticated, triggering and completing PPPoE dialing connection.

The receiving account information input by a subscriber and performing authentication to verify an identity of the subscriber may include: receiving, by a dialup access module, the account information of the subscriber and sending the received account information to a security management module to perform authentication to verify the identity of the subscriber.

The sending a PPPoE dialing instruction after the account information is authenticated, triggering and completing PPPoE dialing connection may include: after the account information is authenticated, sending, by the security management module, the PPPoE dialing instruction to a state management module; after receiving the PPPoE dialing instruction, triggering, by the state management module, a PPPoE stack and a network control module; and completing, by the network control module, PPPoE dialing connection by completing Wireless Fidelity (WIFI) connection and data link establishment.

The method may further include: monitoring in real time, by the dialup access module, state information fed back by the security management module during PPPoE dialup.

When the account information is not authenticated, the security management module may send subscriber-account-information-not-authenticated information to the dialup access module.

The method may further include: managing, by the state management module, a state during PPPoE dialup and feeding the state information back to the security management module.

With the mobile terminal with a built-in PPPoE dialing function and the dialup method therefor according to embodiments of the disclosure, a PPPoE dialing function is built in the mobile terminal, such that internet connection by PPPoE dialup using a mobile terminal is implemented. According to embodiments of the disclosure, an agent process is utilized in the mobile terminal. A process with root permission is adopted to implement the PPPoE dialing function in the mobile terminal, ensuring security of a core system after the PPPoE dialing function is built in the mobile terminal.

### BRIEF DESCRIPTION OF THE DRAWINGS

Fig.1 is a diagram showing the composition of a mobile terminal according to an embodiment of the disclosure; and
Fig.2 is a flowchart of a method for implementing PPPoE dialup with a mobile terminal according to an embodiment of the disclosure.

### DETAILED DESCRIPTION

In an embodiment of the disclosure, a mobile terminal is provided with a module with a PPPoE dialing function and a module for security management, so that a PPPoE dialing function of the mobile terminal under a non-root version may be implemented, ensuring security of a core system of the mobile terminal.

For better understanding of a feature and technical content thereof, an embodiment of the disclosure is elaborated below with reference to the drawings. The drawings are illustrative and are not intended to limit the disclosure.

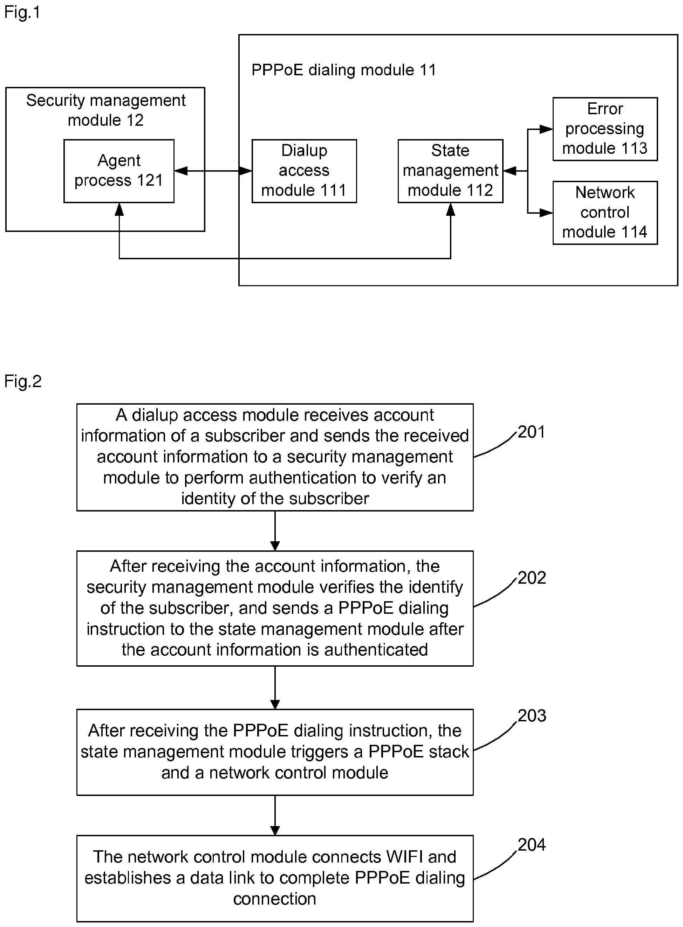

Fig.1 is a diagram showing the composition of a mobile terminal according to an embodiment of the disclosure. As shown in Fig.1, the mobile terminal may include a PPPoE dialing module 11 and a security management module 12. The function of the security management module may be implemented by way of an agent process 121.

The PPPoE dialing module 11 is configured to receive account information input by a subscriber and send the received account information to the security management module 12 for authentication, and receive a PPPoE dialing instruction sent by the security management module 12, trigger and complete PPPoE dialing connection.

PPPoE dialing connection may be triggered and completed by triggering a PPPoE stack, and triggering data link establishment and WIFI connection during PPPoE dialup.

The PPPoE dialing module may be implemented by a third-party-developer application or by a built-in application of the mobile terminal.

A third-party-developer application refers to a client program with a PPPoE dialing function, as a third-party application developed by a third-party application developer. In an actual application, the client program may be downloaded and installed in the mobile terminal as the PPPoE dialing module. The mobile terminal may establish a communication mechanism between the third-party application with the PPPoE dialing function and the agent process. The third-party application with the PPPoE dialing function may call system defined an interface and a message for standard PPPoE dialup to complete human-machine interaction for PPPoE dialup. The interface and the message mainly may include: account information management, PPPoE dialup triggering, PPPoE dialup state feedback, closing a data link triggered by PPPoE dialup, and the like.

A built-in application of the mobile terminal, as the PPPoE dialing module, refers to a client program with a PPPoE dialing function developed by a mobile terminal manufacturer and directly built in the mobile terminal. In this case, standard interface and message definition is not required. The mobile terminal may establish a communication mechanism between the built-in application of the mobile terminal and the agent process by defining an interface and a message as required by the mobile terminal per se.

The security management module 12 is configured to receive the account information sent by the PPPoE dialing module 11, authenticate the account information, send a PPPoE dialing instruction to the PPPoE dialing module 11 after the account information is authenticated, and feed the state information during PPPoE dialup back to the PPPoE dialing module 11.

With a core system used by an existing mobile terminal, such as an Android system, any application must have a permission to use a service of the core system, such as network management and dialup. For example, a root permission is required with Android. With the root permission, a third-party application may acquire a system permission through a specific tool or method, such as a super-user tool. Thus, the third-party application may be authorized to operate the whole system as a built-in module of the mobile terminal. However, availability of the whole root permission that enables the PPPoE dialing function as a third-party application to directly have the root permission to access a core service, network management, dialup, etc,, of the operating system, may undermine security of the whole core system of the mobile terminal, greatly risking security of the mobile terminal.

Thereby, according to an embodiment herein, in order to ensure the security of the whole core system of the mobile terminal, the function of the security management module 12 may be implemented through an agent process 121.

The agent process 121 may have a root permission to complete an operation that requires such a permission.

The mobile terminal may establish a communication mechanism between the PPPoE dialing module 11 and the agent process 121, i.e., to establish the connection and information exchange between the PPPoE dialing module 11 and the security management module 12, as follows. A dialup access module 111 in the PPPoE dialing module 11 may send subscriber account information to the security management module 12. The security management module 12 may send a dialing instruction to a state management module 112 in the PPPoE dialing module 11. The state management module 112 may trigger a PPPoE stack and a network control module 114. The network control module 114 and an error processing module 113 may feed network state information and an error code back to the state management module 112. The state management module 112 may feed the state information back to the dialup access module 111 through the agent process 121. The agent process 121 may control completing the whole PPPoE dialup.

The agent process may be a separate newly-created process with root permission, or may be an existing process with root permission in the system, such as a NETD process.

A mobile terminal under a non-root version, such as an Android terminal, must have a permission to execute a core system service of the mobile terminal. According to an embodiment, an agent process with root permission may execute a system call to establish a communication mechanism with a PPPoE dialing application so that the PPPoE dialing application may have root permission to complete PPPoE dialup.

The PPPoE dialing module 11 may include the dialup access module 111, the state management module 112, the error processing module 113 and the network control module 114.

The dialup access module 111 may be configured to complete human-machine interaction, receive the account information input by the subscriber and send the received account information to the security management module 12 for authentication, and detect the state information fed back by the security management module 12 in real time.

The dialup access module 111 may detect the state information fed back by the security management module 12 in real time to determine whether PPPoE dialup is successful. The state information may include any information during PPPoE dialup, such as whether the subscriber account information is authenticated, whether the PPPoE dialup succeeds, a network connection state during PPPoE dialup, etc.

The state management module 112 may be configured to receive the PPPoE dialing instruction sent by the security management module 12, trigger a PPPoE stack and the network control module 114, manage a state during PPPoE dialup and feed any state information back to the security management module 12.

The state information may include: whether the subscriber account information is authenticated, whether the PPPoE dialing succeeds, the network connection state during PPPoE dialup, etc.

The error processing module 113 may be configured to process any abnormality during PPPoE dialup and feed an error code back to the state management module 112.

The error code may include: an error code indicating that subscriber account information is not authenticated, an error code indicating PPPoE dialup failure, an error code indicating network connection failure during PPPoE dialup, etc.

The network control module 114 may be configured to complete data link establishment and WIFI connection during PPPoE dialup and feed a network connection state back to the state management module 112.

Correspondingly, the state management module 112 may further receive the network connection state information fed back by the network control module 114 and the error code fed back by the error processing module 113.

An embodiment herein further discloses a method for implementing PPPoE dialup with a mobile terminal. The method may include steps as follows.

In Step 101, account information input by a subscriber is received and the subscriber is subjected to authentication.

The account information input by the subscriber may be received by the dialup access module in the mobile terminal. Authentication may be performed by the security management module in the mobile terminal to verify the identity of the subscriber.

In Step 102, a PPPoE dialing instruction is sent after the account information is authenticated. PPPoE dialing connection is triggered and completed.

The PPPoE dialing instruction may be sent by the security management module in the mobile terminal. The PPPoE stack and the network control module may be triggered by the state management module in the mobile terminal. The PPPoE dialing connection may be completed by the network control module.

When the method for implementing PPPoE dialup with a mobile terminal herein is implemented by a mobile terminal as shown in Fig.1, a flow thereof, as shown in Fig.2, may include steps as follows.

In Step 201, a dialup access module receives account information of a subscriber and sends the received account information to a security management module to perform authentication to verify an identity of the subscriber.

At the same time, the dialup access module may monitor any state information fed back by the security management module during PPPoE dialup in real time. The state information may include: whether the account information of the subscriber is authenticated, whether the PPPoE dialing succeeds,, the network connection state during PPPoE dialup and the like.

In Step 202, after receiving the account information, the security management module verifies the identify of the subscriber, and sends a PPPoE dialing instruction to the state management module after the account information is authenticated.

When the account information fails to be authenticated, subscriber-account-information-not-authenticated information may be sent to the dialup access module to prompt the subscriber of the unsuccessful authentication.

The function of the state management module may be implemented through an agent process. The agent process may be a process with root permission and may complete an operation requiring root permission.

The agent process may be a separate newly-created process with root permission, or an existing process with root permission in the system, such as a NETD process.

In Step 203, after receiving the PPPoE dialing instruction, the state management module triggers a PPPoE stack and a network control module.

Meanwhile, the state management module may further receive the network connection state information fed back by the network control module and the error code fed back by the error processing module, manage a state during PPPoE dialup, feed any state information back to the security management module.

In Step 20, the network control module connects WIFI and establishes a data link to complete PPPoE dialing connection.

The network control module may feed information on the network connection state, such as whether the connection succeeds, back to the state management module.

What described are merely embodiments of the disclosure, and are not intended to limit the scope of the disclosure. All equivalent structures or flow variations made using content of the specification and accompanying drawings of the disclosure, or direct or indirect application in another related technical field, likewise fall within the scope of the disclosure.

## Claims

1. A mobile terminal with a built-in Point-to-Point Protocol over Ethernet (PPPoE) dialing function, **characterized in that** the mobile terminal comprises a PPPoE dialing module (11) and a security management module (12), wherein
the PPPoE dialing module (11) is configured to receive account information input by a subscriber and send the received account information to the security management module (12) for authentication, receive a PPPoE dialing instruction sent by the security management module (12), trigger and complete PPPoE dialing connection; and
the security management module (12) is configured to receive the account information sent by the PPPoE dialing module (11), authenticate the account information, send a PPPoE dialing instruction to the PPPoE dialing module (11) after the account information is authenticated, and feed state information during PPPoE dialup back to the PPPoE dialing module (11),
wherein the security management module (12) is implemented through an agent process (121) with root permission, and
wherein the PPPoE dialing module is implemented as a non-root version.

2. The mobile terminal according to claim 1, wherein the PPPoE dialing module (11) is implemented by a third-party-developer application or by a built-in application of the mobile terminal.

3. The mobile terminal according to claim 1, wherein a communication mechanism is established between the PPPoE dialing module (11) and the agent process (121).

4. The mobile terminal according to claim 3, wherein the agent process (121) is a newly-created process with root permission or an existing process with root permission in a mobile terminal system.

5. The mobile terminal according to any one of claims 1 to 3, wherein the PPPoE dialing module (11) comprises a dialup access module (111), a state management module (112), an error processing module (113) and a network control module (114), wherein
the dialup access module (111) is configured to complete human-machine interaction, receive the account information input by the subscriber and send the received account information to the security management module (12) for authentication, and detect the state information fed back by the security management module (12) in real time;
the state management module (112) is configured to receive the PPPoE dialing instruction sent by the security management module (12), trigger a PPPoE stack and the network control module (114), manage a state during PPPoE dialup, and feed the state information back to the security management module (12);
the error processing module (113) is configured to process an abnormality during PPPoE dialup and feed an error code back to the state management module (112); and
the network control module (114) is configured to complete data link establishment and Wireless Fidelity (WIFI) connection during PPPoE dialup and feed a network connection state back to the state management module (112).

6. A dialup method for a mobile terminal with a built-in Point-to-Point Protocol over Ethernet (PPPoE) dialing function, **characterized in that** the method comprises:
receiving, by a PPPoE dialing module (11), account information input by a subscriber and sending the received account information to a security management module (12) for authentication;
receiving, by the security management module (12), the account information sent by the PPPoE dialing module (11); authenticating the account information; and sending a PPPoE dialing instruction to the PPPoE dialing module (11) after the account information is authenticated;
receiving, by the PPPoE dialing module (11), the PPPoE dialing instruction sent by the security management module (12); and triggering and completing PPPoE dialing connection; and
feeding, by the security management module (12), state information during PPPoE dialup back to the PPPoE dialing module (11),
wherein the security management module (12) is implemented through an agent process (121) with root permission,
and wherein the PPPoE dialing module is implemented as a non-root version.

7. The method according to claim 6, wherein the receiving, by a PPPoE dialing module (11), account information input by a subscriber and sending the received account information to a security management module (12) for authentication; receiving, by the security management module (12), the account information sent by the PPPoE dialing module (11); authenticating the account information comprises: receiving, by a dialup access module (111), the account information of the subscriber and sending the received account information to the security management module (12) to perform authentication to verify an identity of the subscriber (201);
the sending a PPPoE dialing instruction to the PPPoE dialing module (11) after the account information is authenticated; receiving, by the PPPoE dialing module (11), the PPPoE dialing instruction sent by the security management module (12); and triggering and completing PPPoE dialing connection comprises: after the account information is authenticated, sending, by the security management module (12), the PPPoE dialing instruction to a state management module (112); after receiving the PPPoE dialing instruction, triggering, by the state management module (112), a PPPoE stack and a network control module (114, 203); and completing, by the network control module (114), PPPoE dialing connection by completing Wireless Fidelity (WIFI) connection and data link establishment (204).

8. The method according to claim 7, further comprising: monitoring in real time, by the dialup access module (111), the state information fed back by the security management module (12) during PPPoE dialup.

9. The method according to claim 7, wherein when the account information is not authenticated, sending, by the security management module (12), subscriber-account-information-not-authenticated information to the dialup access module (111).

10. The method according to claim 7, further comprising: managing, by the state management module (112), a state during PPPoE dialup and feeding the state information back to the security management module (12).

## Patentansprüche

1. Mobiles Endgerät mit einer eingebauten Point-to-Point-over-Ethernet-(PPPoE)-Wählfunktion, **dadurch gekennzeichnet, dass** das mobile Endgerät ein PPPoE-Wählmodul (11) und ein Sicherheitsverwaltungsmodul (12) umfasst, wobei
das PPPoE-Wählmodul (11) dafür konfiguriert ist, eine Account-Informationseingabe von einem Teilnehmer zu empfangen und die empfangenen Account-Informationen zwecks Authentifizierung an das Sicherheitsverwaltungsmodul (12) zu senden, eine PPPoE-Wählanweisung zu empfangen, die von dem Sicherheitsverwaltungsmodul (12) gesendet wird, eine PPPoE-Wählverbindung auszulösen und abzuschließen, und
das Sicherheitsverwaltungsmodul (12) dafür konfiguriert ist, die Account-Informationen zu empfangen, die von dem PPPoE-Wählmodul (11) gesendet werden, die Account-Informationen zu authentifizieren, eine PPPoE-Wählanweisung an das PPPoE-Wählmodul (11) zu senden, nachdem die Account-Informationen authentifiziert wurden, und während der PPPoE-Einwahl Zustandsinformationen an das PPPoE-Wählmodul (11) rückzumelden,
wobei das Sicherheitsverwaltungsmodul (12) über einen Agent-Prozess (121) mit Root-Berechtigung implementiert ist, und
wobei das PPPoE-Wählmodul als Non-Root-Version implementiert ist.

2. Mobiles Endgerät nach Anspruch 1, wobei das PPPoE-Wählmodul (11) durch eine Drittentwickler-Anwendung oder durch eine eingebaute Anwendung des mobilen Endgeräts implementiert ist.

3. Mobiles Endgerät nach Anspruch 1, wobei ein Kommunikationsmechanismus zwischen dem PPPoE-Wählmodul (11) und dem Agent-Prozess (121) eingerichtet ist.

4. Mobiles Endgerät nach Anspruch 3, wobei der Agent-Prozess (121) ein neu erstellter Prozess mit Root-Berechtigung oder ein vorhandener Prozess mit Root-Berechtigung in einem System des mobilen Endgeräts ist.

5. Mobiles Endgerät nach einem der Ansprüche 1 bis 3, wobei das PPPoE-Wählmodul (11) ein Einwahlzugriffsmodul (111), ein Zustandsverwaltungsmodul (112), ein Fehlerverarbeitungsmodul (113) und ein Netzwerksteuerungsmodul (114) umfasst, wobei
das Einwahlzugriffsmodul (111) dafür konfiguriert ist, eine Mensch-Maschine-Interaktion abzuschließen, die Account-Informationseingabe von dem Teilnehmer zu empfangen und die empfangenen Account-Informationen zwecks Authentifizierung an das Sicherheitsverwaltungsmodul (12) zu senden und die Zustandsinformationen, die von dem Sicherheitsverwaltungsmodul (12) in Echtzeit rückgemeldet werden, zu erfassen,
das Zustandsverwaltungsmodul (112) dafür konfiguriert ist, die von dem Sicherheitsverwaltungsmodul (12) gesendete PPPoE-Wählanweisung zu empfangen, einen PPPoE-Stapel und das Netzwerksteuerungsmodul (114) auszulösen, einen Zustand während der PPPoE-Einwahl zu verwalten und die Zustandsinformationen an das Sicherheitsverwaltungsmodul (12) rückzumelden,
das Fehlerverarbeitungsmodul (113) dafür konfiguriert ist, eine Abnormität während der PPPoE-Einwahl zu verarbeiten und einen Fehlercode an das Zustandsverwaltungsmodul (112) rückzumelden, und
das Netzwerksteuerungsmodul (114) dafür konfiguriert ist, eine Datenlink-Einrichtung und eine Wireless-Fidelity-(WiFi-)Verbindung während der PPPoE-Einwahl abzuschließen und einen Netzwerkverbindungszustand an das Zustandsverwaltungsmodul (112) rückzumelden.

6. Einwahlverfahren für ein mobiles Endgerät mit einer eingebauten Point-to-Point-over-Ethernet-(PPPoE)-Wählfunktion, **dadurch gekennzeichnet, dass** das Verfahren Folgendes umfasst:
Empfangen, durch ein PPPoE-Wählmodul (11), einer Account-Informationseingabe von einem Teilnehmer und Senden der empfangenen Account-Informationen zwecks Authentifizierung an ein Sicherheitsverwaltungsmodul (12),
Empfangen, durch das Sicherheitsverwaltungsmodul (12), der Account-Informationen, die von dem PPPoE-Wählmodul (11) gesendet werden, Authentifizieren der Account-Informationen und Senden einer PPPoE-Wählanweisung an das PPPoE-Wählmodul (11), nachdem die Account-Informationen authentifiziert wurden,
Empfangen, durch das PPPoE-Wählmodul (11), der PPPoE-Wählanweisung, die von dem Sicherheitsverwaltungsmodul (12) gesendet wird, und Auslösen und Abschließen einer PPPoE-Wählverbindung und
Rückmelden, durch das Sicherheitsverwaltungsmodul (12), von Zustandsinformationen an das PPPoE-Wählmodul (11) während der PPPoE-Einwahl,
wobei das Sicherheitsverwaltungsmodul (12) über einen Agent-Prozess (121) mit Root-Berechtigung implementiert ist, und
wobei das PPPoE-Wählmodul als Non-Root-Version implementiert ist.

7. Verfahren nach Anspruch 6, wobei das Empfangen, durch ein PPPoE-Wählmodul (11), einer Account-Informationseingabe von einem Teilnehmer und das Senden der empfangenen Account-Informationen zwecks Authentifizierung an ein Sicherheitsverwaltungsmodul (12), das Empfangen, durch das Sicherheitsverwaltungsmodul (12), der Account-Informationen, die von dem PPPoE-Wählmodul (11) gesendet werden, das Authentifizieren der Account-Informationen umfasst: Empfangen, durch ein Einwahlzugriffsmodul (111), der Account-Informationen des Teilnehmers und Senden der empfangenen Account-Informationen an das Sicherheitsverwaltungsmodul (12), um eine Authentifizierung durchzuführen, um eine Identität des Teilnehmers (201) zu verifizieren,
das Senden einer PPPoE-Wählanweisung an das PPPoE-Wählmodul (11), nachdem die Account-Informationen authentifiziert wurden, das Empfangen, durch das PPPoE-Wählmodul (11), der PPPoE-Wählanweisung, die von dem Sicherheitsverwaltungsmodul (12) gesendet wird, und das Auslösen und Abschließen einer PPPoE-Wählverbindung Folgendes umfasst: nachdem die Account-Informationen authentifiziert wurden, Senden, durch das Sicherheitsverwaltungsmodul (12), der PPPoE-Wählanweisung an ein Zustandsverwaltungsmodul (112), nach dem Empfangen der PPPoE-Wählanweisung Auslösen, durch das Zustandsverwaltungsmodul (112), eines PPPoE-Stapels und eines Netzwerksteuerungsmoduls (114, 203) und Abschließen, durch das Netzwerksteuerungsmodul (114), einer PPPoE-Wählverbindung durch Abschließen einer Wireless-Fidelity-(WiFi-)Verbindung und Datenlink-Einrichtung (204).

8. Verfahren nach Anspruch 7, ferner umfassend: Überwachen in Echtzeit, durch das Einwahlzugriffsmodul (111), der Zustandsinformationen, die durch das Sicherheitsverwaltungsmodul (12) während der PPPoE-Einwahl rückgemeldet werden.

9. Verfahren nach Anspruch 7, umfassend, wenn die Account-Informationen nicht authentifiziert werden, das Senden, durch das Sicherheitsverwaltungsmodul (12), von Teilnehmer-Account-nicht-authentifiziert-Informationen an das Einwahlzugriffsmodul (111).

10. Verfahren nach Anspruch 7, ferner umfassend: Verwalten, durch das Zustandsverwaltungsmodul (112), eines Zustands während der PPPoE-Einwahl und Rückmelden der Zustandsinformationen an das Sicherheitsverwaltungsmodul (12).

## Revendications

1. Terminal mobile avec une fonction intégrée de numérotation selon le protocole « point à point sur Ethernet » (PPPoE), **caractérisé en ce que** le terminal mobile comprend un module de numérotation de protocole PPPoE (11) et un module de gestion de sécurité (12), dans lequel :
le module de numérotation de protocole PPPoE (11) est configuré de manière à recevoir des informations de compte entrées par un abonné et à envoyer les informations de compte reçues au module de gestion de sécurité (12) à des fins d'authentification, à recevoir une instruction de numérotation de protocole PPPoE envoyée par le module de gestion de sécurité (12), et à déclencher et achever une connexion de numérotation de protocole PPPoE ; et
le module de gestion de sécurité (12) est configuré de manière à recevoir les informations de compte envoyées par le module de numérotation de protocole PPPoE (11), à authentifier les informations de compte, à envoyer une instruction de numérotation de protocole PPPoE au module de numérotation de protocole PPPoE (11) dès lors que les informations de compte sont authentifiées, et à réinjecter des informations d'état au cours de la numérotation de protocole PPPoE dans le module de numérotation de protocole PPPoE (11) ;
dans lequel le module de gestion de sécurité (12) est mis en oeuvre par le biais d'un processus d'agent (121) avec une permission racine ; et
dans lequel le module de numérotation de protocole PPPoE est mis en oeuvre sous la forme d'une version non racine.

2. Terminal mobile selon la revendication 1, dans lequel le module de numérotation de protocole PPPoE (11) est mis en oeuvre par une application de développeur tiers ou par une application intégrée du terminal mobile.

3. Terminal mobile selon la revendication 1, dans lequel un mécanisme de communication est établi entre le module de numérotation de protocole PPPoE (11) et le processus d'agent (121).

4. Terminal mobile selon la revendication 3, dans lequel le processus d'agent (121) est un processus nouvellement créé avec une permission racine ou un processus existant avec une permission racine dans un système de terminal mobile.

5. Terminal mobile selon l'une quelconque des revendications 1 à 3, dans lequel le module de numérotation de protocole PPPoE (11) comprend un module d'accès commuté (111), un module de gestion d'état (112), un module de traitement d'erreur (113) et un module de commande de réseau (114), dans lequel :
le module d'accès commuté (111) est configuré de manière à achever une interaction homme-machine, à recevoir les informations de compte entrées par l'abonné, à envoyer les informations de compte reçues au module de gestion de sécurité (12) à des fins d'authentification, et à détecter les informations d'état réinjectées par le module de gestion de sécurité (12) en temps réel ;
le module de gestion d'état (112) est configuré de manière à recevoir l'instruction de numérotation de protocole PPPoE envoyée par le module de gestion de sécurité (12), à déclencher une pile de protocoles PPPoE et le module de commande de réseau (114), à gérer un état au cours de la numérotation de protocole PPPoE, et à réinjecter les informations d'état dans le module de gestion de sécurité (12) ;
le module de traitement d'erreur (113) est configuré de manière à traiter une anomalie au cours de l'accès commuté de protocole PPPoE et à réinjecter un code d'erreur dans le module de gestion d'état (112) ; et
le module de commande de réseau (114) est configuré de manière à achever un établissement de liaison de données et une connexion de technologie WIFI au cours de l'accès commuté de protocole PPPoE, et à réinjecter un état de connexion de réseau dans le module de gestion d'état (112).

6. Procédé de numérotation pour un terminal mobile avec une fonction intégrée de numérotation selon le protocole « point à point sur Ethernet » (PPPoE), **caractérisé en ce que** le procédé comprend les étapes ci-dessous consistant à :
recevoir, par le biais d'un module de numérotation de protocole PPPoE (11), des informations de compte entrées par un abonné et envoyer les informations de compte reçues à un module de gestion de sécurité (12) à des fins d'authentification ;
recevoir, par le biais du module de gestion de sécurité (12), les informations de compte envoyées par le module de numérotation de protocole PPPoE (11) ; authentifier les informations de compte ; et envoyer une instruction de numérotation de protocole PPPoE au module de numérotation de protocole PPPoE (11) dès lors que les informations de compte sont authentifiées ;
recevoir, par le biais du module de numérotation de protocole PPPoE (11), l'instruction de numérotation de protocole PPPoE envoyée par le module de gestion de sécurité (12) ; et déclencher et achever une connexion de numérotation de protocole PPPoE ; et
réinjecter, par le biais du module de gestion de sécurité (12), des informations d'état au cours de l'accès commuté de protocole PPPoE, dans le module de numérotation de protocole PPPoE (11) ;
dans lequel le module de gestion de sécurité (12) est mis en oeuvre par le biais d'un processus d'agent (121) avec une permission racine, et dans lequel le module de numérotation de protocole PPPoE est mis en oeuvre sous la forme d'une version non racine.

7. Procédé selon la revendication 6, dans lequel les étapes consistant à recevoir, par le biais d'un module de numérotation de protocole PPPoE (11), des informations de compte entrées par un abonné et à envoyer les informations de compte reçues à un module de gestion de sécurité (12) à des fins d'authentification ; à recevoir, par le biais du module de gestion de sécurité (12), les informations de compte envoyées par le module de numérotation de protocole PPPoE (11) ; et à authentifier les informations de compte, comprennent les étapes consistant à recevoir, par le biais d'un module d'accès commuté (111), les informations de compte de l'abonné, et à envoyer les informations de compte reçues au module de gestion de sécurité (12) en vue de mettre en oeuvre une authentification pour vérifier une identité de l'abonné (201) ; et
les étapes consistant à envoyer une instruction de numérotation de protocole PPPoE au module de numérotation de protocole PPPoE (11) dès lors que les informations de compte sont authentifiées ; à recevoir, par le biais du module de numérotation de protocole PPPoE (11), l'instruction de numérotation de protocole PPPoE envoyée par le module de gestion de sécurité (12) ; et à déclencher et achever une connexion de numérotation de protocole PPPoE comprennent les étapes consistant à : dès lors que les informations de compte sont authentifiées, envoyer, par le biais du module de gestion de sécurité (12), l'instruction de numérotation de protocole PPPoE à un module de gestion d'état (112) ; après réception de l'instruction de numérotation de protocole PPPoE, déclencher, par le biais du module de gestion d'état (112), une pile de protocoles PPPoE et un module de commande de réseau (114, 203) ; et achever, par le biais du module de commande de réseau (114), une connexion de numérotation de protocole PPPoE en achevant une connexion de technologie WIFI et un établissement de liaison de données (204).

8. Procédé selon la revendication 7, comprenant en outre l'étape consistant à : surveiller en temps réel, par le biais du module d'accès commuté (111), les informations d'état réinjectées par le module de gestion de sécurité (12) au cours de l'accès commuté de protocole PPPoE.

9. Procédé selon la revendication 7, où, lorsque les informations de compte ne sont pas authentifiées, le procédé comprend l'étape consistant à envoyer, par le biais du module de gestion de sécurité (12), des informations non authentifiées d'informations de compte d'abonné au module d'accès commuté (111).

10. Procédé selon la revendication 7, comprenant en outre les étapes consistant à : gérer, par le biais du module de gestion d'état (112), un état, au cours de l'accès commuté de protocole PPPoE, et réinjecter des informations d'état dans le module de gestion de sécurité (12).
